# EUROPEAN PATENT SPECIFICATION

(11) **EP 2 529 877 B1**
(45) Date of publication and mention of the grant of the patent: **04.09.2019**
(21) Application number: 12170343.3
(22) Date of filing: 31.05.2012
(51) Int. Cl.: B23P 6/00, F02C 7/36

(54) **Assembly and method for repairing damage in a gas turbine engine component**
Vorrichtung und Verfahren zur Reparatur einer Gasturbinenmotorkomponente
Assemblage et procédé de réparation de composant d'un moteur à turbine à gaz

(30) Priority: 31.05.2011 US 201113149145
(43) Date of publication of application: 05.12.2012
(73) Proprietor: United Technologies Corporation, Farmington, CT 06032 (US)
(72) Inventor: Palmisano, Leonard Paul, Forestville, CT Connecticut 06010 (US); DeRosa, Robert J., Tolland, CT Connecticut 06085 (US); Bogue, William, Hebron, CT Connecticut 06248 (US)
(74) Representative: Dehns

(56) References cited:
- EP-A2- 1 331 362
- EP-A2- 1 959 094
- US-A- 5 608 958
- US-A- 5 913 523
- US-A1- 2010 000 090

## Description

### BACKGROUND

The present invention relates to the repair of a damage in a gas turbine engine component.

It is common that machinery is made of functional modules that attach to each other usually by means of bolts, clamps, screws and the like. Common openings between modules may allow for the transfer of fluids such as gasses or liquids, and mechanical, electrical or other types of energy to enable adjacent modules to cooperate.

If the modules are separated, it is important that the areas that link the modules together are not damaged to avoid leaks, contamination, inefficiencies or the like.

If an edge of a circular opening, for instance, gets nicked, it is typical to machine the bore of the opening to remove enough material to eliminate the damage. A bead or an insert is then welded to the bore to rebuild the bore of the opening to its initial tolerance.

A prior art repair method is disclosed in US-5608958 wherein an assembly and a method for repairing a damage in a gas turbine engine are discussed. The assembly comprises: a gas turbine engine component, said component having a bore, and a machined area disposed on an outside surface of said component, said machined area having a first depth equal to or greater than a depth of damage to said component, a shim having a body having a first side and a second side and a thickness therebetween that is equal to said first depth, wherein said body fits within said machined area. The method comprises locating a damage in a surface of said component in proximity to an edge of a bore, machining an area into an outer surface of said component in proximity to said bore to a first depth that is equal to or greater than a depth of said damage in said outer surface, inserting a shim into said area, said shim having a body having a first side and a second side and a thickness therebetween that is equal to said first depth.

### SUMMARY

According to the present invention, there is provided an assembly as claimed in claim 1, and a method as claimed in claim 8. Preferred embodiments are presented on the dependent claims.

The machined area may comprise a second bore that is not an attachment hole.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 shows a side, sectional view of a gear box for a jet engine incorporating a plurality of shims as described herein.
Figure 2 shows an orthogonal view of a representative opening in a gear box as shown in Figure 1.
Figure 3 is a plan view of a shim that is installed in the gear box of Figure 1.
Figure 4 is a side view of the shim of Figure 2.
Figure 5 shows the steps in a repair method.

### DETAILED DESCRIPTION

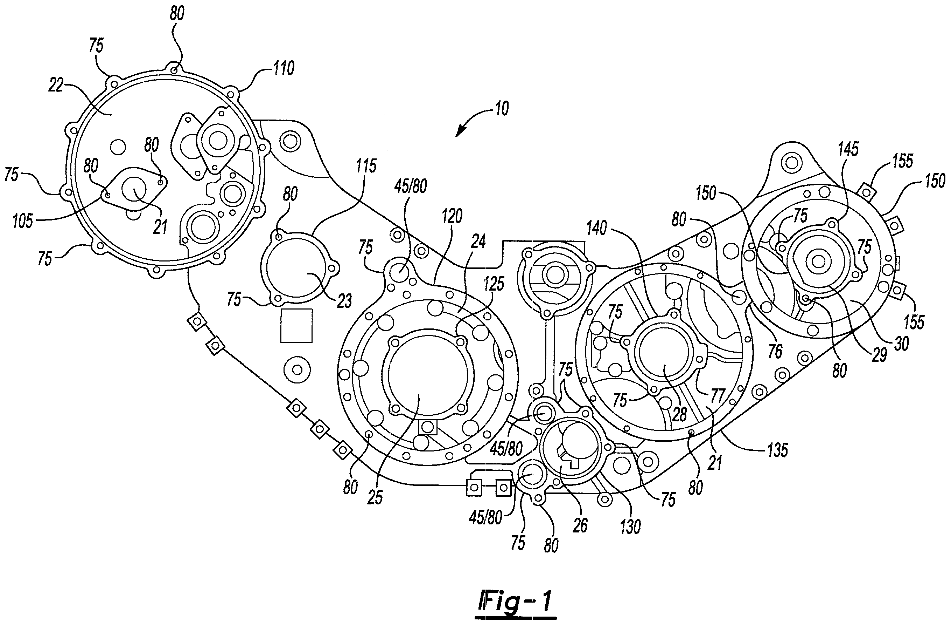

Referring to Figure 1, the side, sectional view of a mechanical piece, such as a gas turbine engine gear box, 10 is shown. The gear box 10 has a multitude of representative openings 21, 22, 23, 24, 25, 26, 27, 28, 29, and 30 that bolt, or otherwise attach, to another half (not shown) of a casing or to other individual pieces of machinery (not shown). This particular type of gear box is constructed of cast magnesium or aluminum and is therefore more susceptible to damage than harder, but heavier, materials.

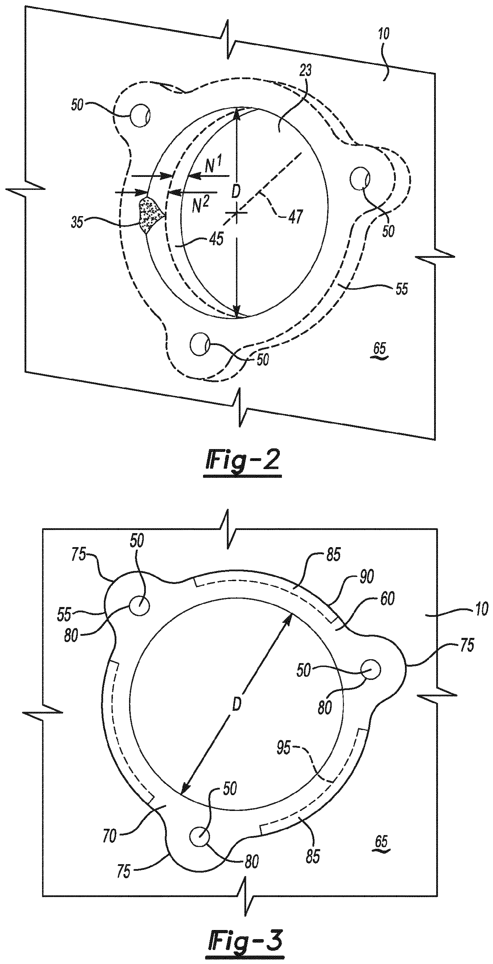

Referring now to Figure 2, if the gear box 10, or other machinery, is assembled or disassembled, damage, such as nick 35, to an edge 40 (or in proximity to) of opening 23 may occur particularly because of the softer, but lighter materials required for aircraft applications. Opening 23 has a central bore 45 having a diameter D disposed about axis 47 and is surrounded by three bolt holes 50 so that an accessory (not shown) may be bolted to the gear box 10. The nick extends into the bore a distance N1 and into the surrounding gear box 10 a distance N2.

In the past, the bore diameter D was machined out the distance N2 to eliminate the nick, but the Applicants have discovered that there are two distinct problems with such actions: it can be seen in Figure 1 that there are so many openings 21-30 that are close to each other that increasing the bore diameter D may not be possible without damaging other openings 21-30 or other holes 50; and, repairing the bore to its initial tolerances usually required higher temperatures, like for welding a bead or an insert, that tends to warp the gear box 10 and cause holes 50 to migrate and misalign with holes on other machinery modules (not shown) which required other costly repairs.

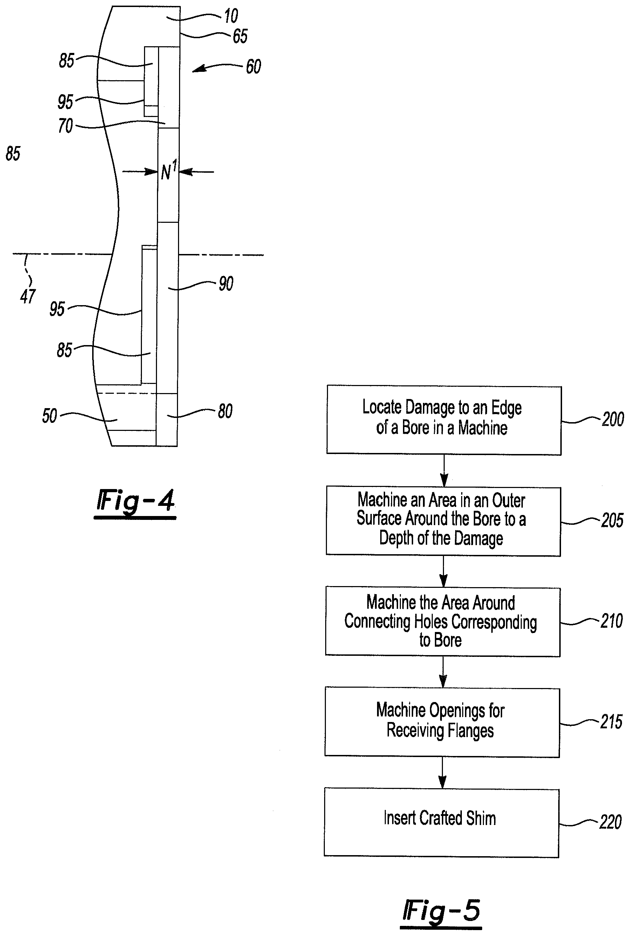

In the disclosed embodiment, instead of machining out the bore 45, an area 55 corresponding to the shape of a shim 60 (see also Figs. 3 and 4) is machined into the outer surface 65 of the gear box 10 a distance N1 to eliminate the nick 35. By using the shim 60, no high temperatures are needed for repair and there is no interference with other holes 21-30.

Referring now to Figures 3 and 4, an exemplar shim 60 is shown in place in area 55 on a gear box 10. The shim 60 has a flat, annular (though other shapes are contemplated herein), body 70 with a plurality of lobes 75 extending radially outwardly from the body 70. Each lobe 75, which may be differently or even oddly shaped depending on the shape of the gear box 10 or other machinery, has an opening 80 extending therethrough that are placed to be in register with holes 50 so that bolts (not shown) may join the gear box halves without modification. The shim 60 has a diameter D which is the same as the bore 45 thereby effecting repair.

The body 70 may have a plurality flanges 85 disposed around the outer edges 90 of the body. The area 55 may have a deeper opening 95 machined therein for receiving the flanges 85 therein. The flanges 85 and openings 95 act to locate the shim properly within the area 55.

Referring to the Figure 5, a method for applying a shim 60 is shown. A damaged bore 45 in a machine is located (step 200). An area 55 is machined into the surface 65 around the bore 45 to the depth N2 of the damage (e.g., nick 35) around the bore and is shaped to receive the shim (step 205). The area 55 may also include openings for receiving connectors (not shown) corresponding to the bore 45 (step 210). The area 55 may have openings 95 machined deeper therein to receive shim flanges 85 (step 215). A crafted shim 60 having flanges 85 extending therefrom to mate approximately with openings 95 and having a body 70 with a depth N2 is inserted into the area 55 (step 220) and the bore and its surrounding surface is now back to original spec without warpage or damage to adjacent openings. Because the shapes of the openings 21-30 and the shapes of damage (e.g., nick 35) to them are so varied, the shim may need to be constructed for each application. In areas 55 where the machine casing 10 is not thick enough, the flanges 85 may be eliminated from the design. Existing bolt holes 50 are always used to place the shims to avoid extra work in the machining or interfering with required tolerances. As stated hereinbelow, the shim may be made of or coated with different materials.

The shim 60 and its lobes 75 may take many shapes and may repair more than one nick 35 on more than one bore 45. For instance, shim 105 about opening 21 has an ovate shape with two holes 80. Shim 110 is circular and has a plurality of crafted lobes 75 extending outwardly from the body 70 of the shim 60. Shim 115, which is seen in Figs 2-4, has three lobes 75 about its circumference. Shim 120 has one lobe 75 extending therefrom, which may be an opening 80 or another bore 45 and a plurality of openings 80 distributed around the body 70. Shim 125 has four regularly spaced lobes 75 extending thereabouts. Shim 130 has four lobes 75 (two of which are larger) which may also correspond to other bores 45. Shim 135 shows one large lobe 76 which is square shaped, and several openings 80 around the circumference of the shim 135. Shim 140 has four lobes with three lobes 75 regularly shaped and a fourth lobe 77 with a rectangular shape. Shim 145 has four regular lobes 75 and a break 150 in its circumference. Shim 150 has no lobes but does have a plurality of tabs 155 extending therefrom.

The shim 60 material may also be crafted by constructing or coating it with different materials or coatings to enhance the functionality of the gear box 10. For instance, if the second half (not shown) of the gearbox 10 or other connectors (not shown) are made of a hard material, relative motion therebetween tends to damage the gearbox that is constructed of generally softer magnesium or aluminum. The shim 60 may be coated or constructed of a harder material such as an oxide, or coated with a lubricious material such as PTFE. The shim 60 may also be coated with a thermal spray or a PVD coating. If electrical resistance between the parts is desired, the shim may be made of an oxide or painted. Similarly if electrical resistance between the parts is not desired, the shim may be made of or coated with an inorganic material or anodized. Also, the part may have an inert coating for chemical resistance. Other coatings and materials for the shim 60 are contemplated herein depending on the shim environment and the types of parts used therewith.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. An assembly for repairing damage in a gas turbine engine, said assembly comprising:
a gas turbine engine component (10), said component (10) having a bore (45) and a machined area (55) disposed on an outside surface (65) of said component (10) contiguous to said bore (45), said machined area (55) having a first depth (N1) equal to or greater than a depth (N2) of damage to said component (10); and
a shim (60) having a body (70) having a first side and a second side and a thickness (N1) therebetween that is equal to said first depth (N1), wherein said body (70) fits within said machined area (55) and is flush with said surface (65), said machined area (55) encompasses an attachment hole (50) for joining to said gas turbine engine component (10), and said shim (60) comprises an opening (80) to align with said attachment hole (50).

2. The assembly of claim 1, wherein said machined area (55) further comprises a second bore that is not an attachment hole (50).

3. The assembly of claim 1 or 2, wherein said body (70) has an annular shape.

4. The assembly of any preceding claim, wherein said first side of said body (70) has a locating flange (85) disposed therein for fitting within a corresponding groove disposed in said area (55).

5. The assembly of any preceding claim, wherein said body further comprises a lobe (75) for extending around said attachment hole (50).

6. The assembly of any preceding claim, wherein said shim (60) is constructed of a different material than said component (10).

7. The assembly of any preceding claim, wherein said shim (60) has a coating thereon.

8. A method of repairing damage in a gas turbine engine component (10) comprising:
locating damage in a surface of said component (10) in proximity to or within an edge of a bore (45);
machining an area into an outer surface (65) of said component (10) in proximity to and touching said bore (45) to a first depth that is equal to or greater than a depth of said damage in said outer surface (65);
inserting a shim (60) into said area, said shim having a body (70) having a first side and a second side and a thickness therebetween that is equal to said first depth wherein said shim (60) is flush with said outer surface (65);
including attachment holes (50) in said area in proximity to said bore (45); and
placing openings (80) in said shim (60) to align with said attachment holes (50).

9. The method of claim 8, further comprising defining a lobe (75) in said shim, said lobe (75) contiguous to said attachment holes (50) if said shim (60) is inserted into said area.

10. The method of claim 8 or 9, further comprising including an adjacent bore in said area.

11. The method of any of claims 8 to 10, further comprising:
placing a locator opening (95) in said area; and
extending a locator from said shim (60) and disposing said locator in said locator opening (95) wherein said shim (60) is flush with said surface (65).

12. The method of any of claims 8 to 11, further comprising constructing said shim (60) of a different material than said component or coating said shim (60).

## Patentansprüche

1. Vorrichtung zum Reparieren von Schäden in einem Gasturbinenmotor, wobei die Vorrichtung Folgendes umfasst:
eine Gasturbinenmotorkomponente (10), wobei die Komponente (10) eine Bohrung (45) und einen gefrästen Bereich (55) aufweist, der an einer Außenfläche (65) der Komponente (10) angeordnet ist und an die Bohrung (45) angrenzt, wobei der gefräste Bereich (55) eine erste Tiefe (N1) aufweist, die einer Tiefe (N2) des Schadens an der Komponente (10) entspricht oder größer als diese ist; und
eine Ausgleichscheibe (60), die einen Körper (70) aufweist, der eine erste Seite und eine zweite Seite und eine (Dicke (N1) dazwischen, die der ersten Tiefe (N1) entspricht, aufweist, wobei der Körper (70) in den gefrästen Bereich (55) passt und bündig mit der Fläche (65) abschließt, wobei der gefräste Bereich (55) ein Befestigungsloch (50) zum Verbinden mit der Gasturbinenmotorkomponente (10) umfasst und die Ausgleichscheibe (60) eine Öffnung (80) umfasst, die mit dem Befestigungsloch (50) ausgerichtet wird.

2. Vorrichtung nach Anspruch 1, wobei der gefräste Bereich (55) ferner eine zweite Bohrung umfasst, bei der es sich nicht um ein Befestigungsloch (50) handelt.

3. Vorrichtung nach Anspruch 1 oder 2, wobei der Körper (70) eine Ringform aufweist.

4. Vorrichtung nach einem der vorhergehenden Ansprüche, wobei die erste Seite des Körpers (70) einen Anlageflansch (85) aufweist, der zum Einpassen in eine entsprechende in dem Bereich (55) angeordnete Kerbe darin angeordnet ist.

5. Vorrichtung nach einem der vorhergehenden Ansprüche, wobei der Körper ferner einen Nocken (75) umfasst, der sich um das Befestigungsloch (50) herum erstreckt.

6. Vorrichtung nach einem der vorhergehenden Ansprüche, wobei die Ausgleichscheibe (60) aus einem anderen Material hergestellt ist als die Komponente (10).

7. Vorrichtung nach einem der vorhergehenden Ansprüche, wobei die Ausgleichscheibe (60) eine Beschichtung darauf aufweist.

8. Verfahren zum Reparieren von Schäden in einer Gasturbinenmotorkomponente (10), umfassend:
Lokalisieren eines Schadens in einer Fläche der Komponente (10) in der Nähe von oder im Rand einer Bohrung (45) ;
Fräsen eines Bereichs in eine Außenfläche (65) der Komponente (10) in der Nähe der Bohrung (45) oder an diese angrenzend bis zu einer ersten Tiefe, welche einer Tiefe des Schadens in der Außenfläche (65) entspricht oder größer als diese ist;
Einsetzen einer Ausgleichscheibe (60) in den Bereich, wobei die Ausgleichscheibe einen Körper (70) aufweist, der eine erste Seite und eine zweite Seite und eine Dicke dazwischen, die der ersten Tiefe entspricht, aufweist, wobei die Ausgleichscheibe (60) bündig mit der Außenfläche (65) abschließt;
Einfügen von Befestigungslöchern (50) in den Bereich in der Nähe der Bohrung (45); und
Platzieren von Öffnungen (80) in der Ausgleichscheibe (60) derart, dass sie mit den Befestigungslöchern (50) ausgerichtet sind.

9. Verfahren nach Anspruch 8, ferner umfassend ein Definieren eines Nockens (75) in der Ausgleichscheibe, wobei der Nocken (75) an die Befestigungslöcher (50) angrenzt, wenn die Ausgleichscheibe (60) in den Bereich eingesetzt ist.

10. Verfahren nach Anspruch 8 oder 9, ferner umfassend ein Einschließen einer benachbarten Bohrung in den Bereich.

11. Verfahren nach einem der Ansprüche 8 bis 10, ferner umfassend:
Platzieren einer Zentrierringöffnung (95) in dem Bereich; und
Erweitern der Ausgleichscheibe (60) um einen Zentrierring und Anordnen des Zentrierrings in der Zentrierringöffnung (95), wobei die Ausgleichscheibe (60) bündig mit der Fläche (65) abschließt.

12. Verfahren nach einem der Ansprüche 8 bis 11, ferner umfassend ein Herstellen der Ausgleichscheibe (60) aus einem anderen Material als die Komponente oder ein Beschichten der Ausgleichscheibe (60).

## Revendications

1. Assemblage de réparation d'un moteur à turbine à gaz, ledit assemblage comprenant :
un composant d'un moteur à turbine à gaz (10), ledit composant (10) ayant un alésage (45) et une zone usinée (55) disposée sur une surface extérieure (65) dudit composant (10) contiguë audit alésage (45), ladite zone usinée (55) ayant une première profondeur (N1) égale ou supérieure à une profondeur (N2) de l'endommagement dudit composant (10) ; et
une cale (60) ayant un corps (70) ayant un premier côté et un second côté et une épaisseur (N1) entre ceux-ci qui est égale à ladite première profondeur (N1), dans lequel ledit corps (70) s'adapte à l'intérieur de ladite zone usinée (55) et se trouve au même niveau que ladite surface (65), ladite zone usinée (55) englobe un trou de fixation (50) pour une liaison audit composant d'un moteur à turbine à gaz (10), et ladite cale (60) comprend une ouverture (80) à aligner avec ledit trou de fixation (50).

2. Assemblage selon la revendication 1, dans lequel ladite zone usinée (55) comprend en outre un second alésage qui n'est pas un trou de fixation (50).

3. Assemblage selon la revendication 1 ou 2, dans lequel ledit corps (70) a une forme annulaire.

4. Assemblage selon une quelconque revendication précédente, dans lequel ledit premier côté dudit corps (70) a une bride de positionnement (85) disposée à l'intérieur pour une adaptation à l'intérieur d'une rainure correspondante disposée dans ladite zone (55).

5. Assemblage selon une quelconque revendication précédente, dans lequel ledit corps comprend en outre un lobe (75) pour s'étendre autour dudit trou de fixation (50).

6. Assemblage selon une quelconque revendication précédente, dans lequel ladite cale (60) est constituée d'un matériau différent de celui dudit composant (10).

7. Assemblage selon une quelconque revendication précédente, dans lequel ladite cale (60) a un revêtement appliqué sur celle-ci.

8. Procédé de réparation de composant d'un moteur à turbine à gaz (10) comprenant :
la localisation d'un endommagement sur une surface dudit composant (10) à proximité ou à l'intérieur d'un bord d'un alésage (45) ;
l'usinage d'une zone sur une surface extérieure (65) dudit composant (10) à proximité dudit alésage (45) et touchant celui-ci à une première profondeur qui est égale ou supérieure à une profondeur dudit endommagement sur ladite surface extérieure (65) ;
l'insertion d'une cale (60) sur ladite surface, ladite cale ayant un corps (70) ayant un premier côté et un second côté et une épaisseur entre ceux-ci qui est égale à ladite première profondeur, dans lequel ladite cale (60) se trouve au même niveau que ladite surface extérieure (65) ;
l'inclusion de trous de fixation (50) dans ladite zone à proximité dudit alésage (45) ; et
le placement d'ouvertures (80) dans ladite cale (60) à aligner avec lesdits trous de fixation (50).

9. Procédé selon la revendication 8, comprenant en outre la définition d'un lobe (75) dans ladite cale, ledit lobe (75) étant contigu auxdits trous de fixation (50) si ladite cale (60) est insérée dans ladite zone.

10. Procédé selon la revendication 8 ou 9, comprenant en outre l'inclusion d'un alésage adjacent dans ladite zone.

11. Procédé selon l'une quelconque des revendications 8 à 10, comprenant en outre :
le placement d'une ouverture de positionnement (95) dans ladite zone ; et
l'extension d'un dispositif de positionnement à partir de ladite cale (60) et la disposition dudit dispositif de positionnement dans ladite ouverture de positionnement (95), dans lequel ladite cale (60) se trouve au même niveau que ladite surface (65).

12. Procédé selon l'une quelconque des revendications 8 à 11, comprenant en outre la construction de ladite cale (60) à partir d'un matériau différent de celui dudit composant ou le revêtement de ladite cale (60).
